## Europäisches Patentamt

## European Patent Office

## Office européen des brevets

(11) Publication number: **0 361 887**
**A2**

# EUROPEAN PATENT APPLICATION

(21) Application number: **89309827.7**

(22) Date of filing: **27.09.89**

(51) Int. Cl.⁵: **G06F 12/08**

(30) Priority: **28.09.88 US 250364**

(43) Date of publication of application:
**04.04.90 Bulletin 90/14**

(84) Designated Contracting States:
**DE FR GB**

(71) Applicant: **DATA GENERAL CORPORATION**
**4400 Computer Drive**
**Westboro Massachusetts 01581(US)**

(72) Inventor: **Perich, Daniel N.**
**11 Mountainshire Drive**
**Worcester Massachusetts 01606(US)**

(74) Representative: **Pears, David Ashley et al**
**REDDIE & GROSE 16 Theobalds Road**
**London WC1X 8PL(GB)**

(54) Multiple processor/cache memory system and data transaction control therefor.

(57) A multiple processor system which uses at least two processors (10, 11), cache memory units (12, 13) associated with the processors respectively, a main memory (20), a plurality of cache buses (16, 17), each of which is connected to all of the cache memory units (12, 13), and a plurality of memory buses (18, 19) connected to the main memory (20). Control units (14, 15) control the use of the cache buses (16, 17) and main memory buses (18, 19) so as to permit simultaneous broadcasting of data and simultaneous transfer of such broadcast data among cache memory units (12, 13) and between cache memory units and the main memory (20) on different ones of the cache buses (16, 17) and the main memory buses (18, 19). The control units (14, 15) further control the buses (16-19) so that data which has been modified by a processor (10 or 11) and stored in its associated cache memory (12 or 13) can be simultaneously transferred both to another cache memory unit (13 or 12) which has requested it and to the main memory (20).

FIG. 1

# MULTIPLE PROCESSOR/CACHE MEMORY SYSTEM AND DATA TRANSACTION CONTROL THEREFOR

## Introduction

This invention relates generally to data processing systems using multiple processors each having an associated cache memory and, more particularly, to techniques for efficiently handling the simultaneous transfer of different data to different cache memories and the accessing and transfer of modified data simultaneously to main memory and to a requesting cache memory in a coherent manner.

## Background Of The Invention

In data processing systems using multiple cache memories associated with multiple processors, different data is often required to be supplied to different cache memories over a multiple bus system. Conventionally a relatively complicated control system is used to act as a data "traffic manager." The control system controls the selection of which data is to be transferred on which bus and in each case controllably directs particular data to a particular cache unit which is requesting it on a particular bus which is selected for that purpose.

Moreover, in such systems a technique must be used for handling modified data, i.e., data which has been modified by one of the processors during a processing operation. In such process, the system normally stores the modified data in the modifying processor's cache memory but does not immediately provide the modified data either to main memory or to any other cache memory of the system which may request it. At a later point in time the modified data is then subsequently copied into main memory and into such other cache memory which has requested it. The subsequent copying operation requires an extra data transfer cycle and, accordingly, increases the overall operating time for the system in performing such transfer operation.

Alternatively, the modified data is stored in main memory only and subsequently the data is accessed from main memory and copied into the requesting cache memory. Again, such operation requires an additional data transfer cycle. In addition, the system must assure that the modified data is correctly identified, i.e., by its correct address, sometimes referred to as an address coherency requirement.

It is desirable to be able to handle simultaneous transfer of different data to different cache units, as well as to handle transfers of modified data in a multiple processor/multiple cache system in a more efficient manner so as to require less overall operating time for such operation, thereby achieving higher data throughput for the system.

## Brief Summary Of The Invention

In accordance with the invention each of a plurality of cache memory units, each associated, for example, with a processor unit, is ported to each of a plurality of buses. Different data can be separately broadcast simultaneously each different data being broadcast on a different bus, all of the broadcasted data thereby being available to each cache unit via the different buses to which cache is ported. Each cache unit thereupon identifies which data, if any, is intended to be transferred to it. Data identified as intended for a particular cache unit is then accepted by the intended cache from the bus on which that data resides and is being transferred and all other data, not intended for that particular cache unit, can be ignored by it. In this manner, different data can be simultaneously transferred or broadcast on a different one of the plurality of buses and accepted only by those cache units for which each different data is intended.

Further in accordance with the invention, the transfer of modified data from one cache to another cache which has requested the modified data and the copying back of the modified data to main memory are optimized by arranging for an immediate transfer of the modified data to main memory simultaneously with the cache-to-cache transfer. Such operation can be provided in a multiple processor/multiple cache system using a control led cache unit bus and a controlled main memory bus, transactions being capable of occurring simultaneously on such busses to permit communication with the requesting cache unit and with the main memory simultaneously. If multiple cache unit buses and main memory buses are used, independent processing operations can be performed on the other sets of cache unit/main memory buses at the same time the modified data transfer occurs.

## Description Of The Invention

The invention can be described in more detail with the help of the accompanying drawings wherein:

Fig. 1 shows a block diagram of a system of the invention for providing simultaneous transfer of data with respect to a pair of cache units;

Fig. 2 shows a timing diagram illustrating a simultaneous transfer of data in the system of Fig. 1;

Fig. 3 shows a block diagram extending the system of Fig. 1 for use with N cache units;

Fig. 4 shows a block diagram illustrating the general problem of handling transfers of modified data;

Fig. 5 shows a block diagram of a system of the invention for providing for such modified data transfers;

Fig. 6 shows a timing diagram helpful in understanding another part of such modified data transfer operations in accordance with the invention;

Fig. 7 shows a block diagram of a typical cache unit of the invention;

Fig. 8 is a timing diagram helpful in understanding another part of such modified data transfer operations in accordance with the invention;

Figs. 9-17 are additional timing diagrams which are further helpful in understanding the bus protocol used in the invention; and

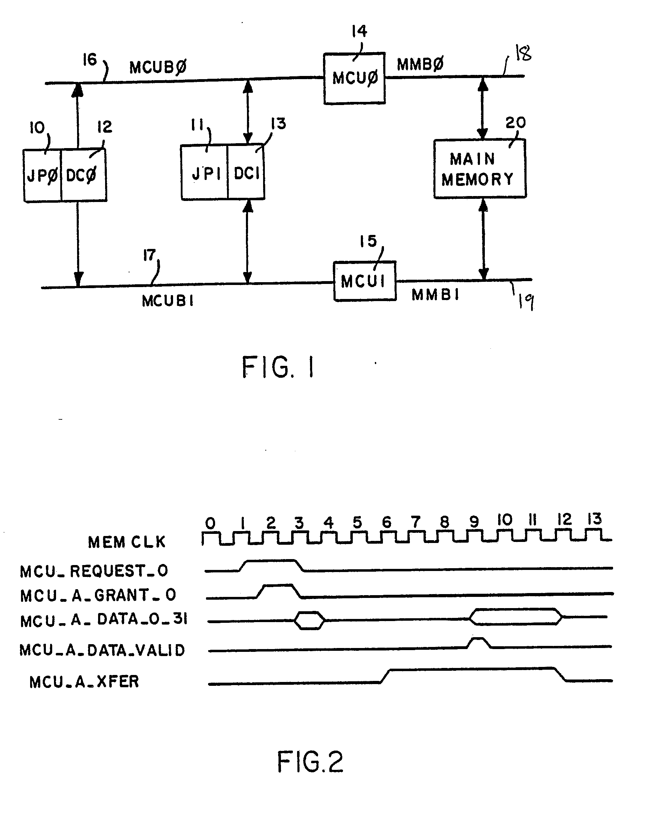

Fig. 1 depicts a particular simplified embodiment illustrative of the invention for providing a simultaneous transfer of different data with respect to the different cache memory units. As seen therein, a pair of processors (JP0 and JP1) 10 and 11 have a corresponding pair of cache memory units (DC0 and DC1) 12 and 13, respectively, each associated with one of the processors, as shown. A pair of memory control units (MCU0 and MCU1) 14 and 15 are used to control the use, respectively, of a pair of memory control unit (MCU) buses (MCUB0 and MCUB1) 16 and 17 and a pair of main memory buses (MMB0 and MMB1) 18 and 19, the latter providing communication with a main memory 20. Each of the cache units 12 and 13 is ported to, i.e., is connected for communication with, both cache unit buses 16 and 17 and can transfer data onto, or receive data from, each of such buses.

If transfers of different data are to be made from cache unit 12 to cache unit 13 and from cache unit 13 to cache unit 12, for example, memory control unit 14 controls the broadcasting of the data from cache unit 12 onto cache unit bus 16, while memory control 15 controls the simultaneous broadcasting of the data from cache unit 13 onto cache unit bus 17. The destination for data is implicit in the bus protocol (see discussion thereof below), i.e., if a unit requests data, the next data placed on the bus is autpmatically the data intended for that requestor.

When a particular cache unit receives the data which has been broadcast on any cache bus as destined for it, the cache unit includes additional logic for receiving and appropriately storing such data therein. Such operation is illustrated by the timing diagram shown in Fig.2 and is further discussed later with respect to the bus protocol discussed below.

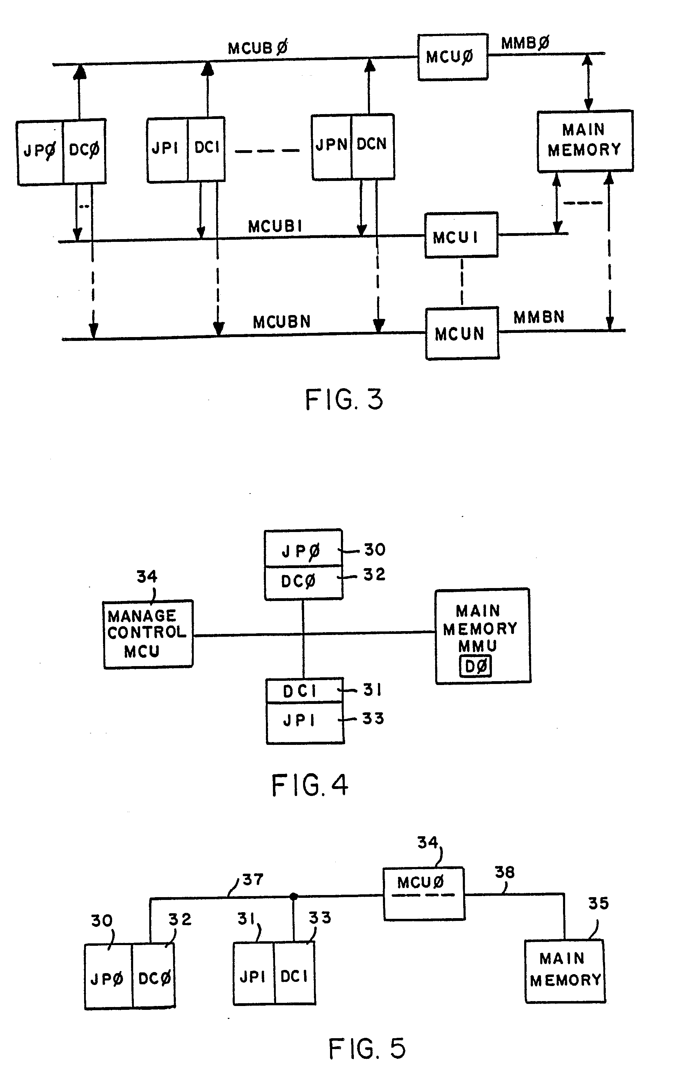

If a plurality of N processor/cache unit pairs are used, as shown by processor J0...JPN and cache units DC0...DCN in Fig. 3, each of the cache units are ported to each of a plurality of N cache unit buses as shown by MCB0...MCBN. Control of data accessing and transfer is provided by N memory control units MCU0... MCUN, each controlling the use of a corresponding pair of cache unit bus as well main memory buses, MMB0 ...MMBN, for such purpose.

Accordingly, up to N transfers of different N data can be performed simultaneously among the N cache units. Each cache unit can broadcast data identified as destined for another cache unit onto a selected cache unit bus under control of the memory control unit which controls such bus. For example, if, full capability of the broadcast scheme is required, each of the N cache units may be required to transfer data to one of the other cache units. Such different data transfer can be performed simultaneously such that each cache unit broadcasts its data on a different one of the cache buses simultaneously with the broadcasting of data by each of the other cache unit on the other cache buses. Each cache unit accepts only the data which is destined for it and thereupon receives and stores such data simultaneously with the receiving and storing of the other data by other cache units. Less complicated control of such broadcasting operations by each of the memory control units is needed since such units respond to bus requests and control the use of their associated buses by a requesting cache unit but are not required to interpret and control the directing of such data to specific one of the cache units themselves. The broadcasting of data to all cache units via the cache unit buses to which all cache units are ported permits destination control to reside in the cache units themselves each of which interprets and accepts only the data which is destined for it.

Fig. 4 provides a block diagram for illustrating another common problem which arises in multiple processor/multiple cache memory systems for handing transfers of modified data. In the example depicted,

3

the system is shown as using two processors (JP0 and JP1) 30 and 31, each of which has associated with it a cache memory unit (DC0 and DC1) 32 and 33, respectively. A management control unit (MCU) 34 controls data transfer operations among the processor units, the cache units, and a main memory unit (MMU) 35 via a bus 36. Let it be assumed that processor 30 has requested data D0 from main memory 35, has accessed such data and has placed it into its cache unit 32. During a processing operation using such data, processor 30 thereupon modifies the data, which data can be referred to as modified data D1. Processor 31 thereupon requests the modified data to be placed into its cache unit 33. A copy of modified data D1 must also be written into main memory 35 identifiable by the same address therein as that of the original unmodified data D0.

The performance of the above modified data transactions is conventionally approached in one of two previously known ways. In accordance with one technique, JP0 accesses data D0, modifies it to data D1, and then places D1 into its cache unit DC0. The modified data is then subsequently written into main memory at the same address as the original data D0. JP1 then subsequently reads the modified data D1 from main memory and places it into its cache unit DC1. Such operation requires in effect two data transfers, once the data has been modified.

In another previously known approach, JP0 accesses data D0, modifies it to D1 and places D1 into its cache unit CU0. D1 is then transferred from cache unit DC0 into cache unit DC1 at the request of processor JP1. JP1 uses modified data D1 and then subsequently transfers D1 to the address in main memory of original data D0. Such operation also requires in effect two data transfer operations once the data has been modified.

In order to avoid the need for such two transfer operations, the system of the invention is arranged as shown in FIG. 5.

As can be seen in the particular exemplary embodiment of the invention depicted therein, a dual processor/dual cache memory system comprises a first processor (JP) 30 and an associated cache memory unit (DC0) 32 and a second processor (JP1) 31 and associated cache memory unit (DC1) 33, the cache memory units being capable of storing data which are duplicates of data stored in a main memory unit 35. A cache bus 37 is connected to each of the cache units 32 and 33 for communication therewith and with the associated processors 30 and 31. A management control unit (MCU0, MCU1) 34 is used to manage data transfers with respect to the cache bus 27. MCU0 is also used to control data transfers with respect to main memory 35 via main memory memory bus 38.

In an operation in which data which is present in a particular cache unit is modified, as discussed above, the system performs a requested modified data transfer as follows.

Let it be assumed that processor 30 has accessed data D0 from main memory 35, has placed it in its cache unit 32, and has modified such data to data D1, placing the modified data D1 back into its cache unit 32. Processor 31 thereupon requests the modified data from cache 32 for storage in its cache unit 33 for use by processor 31. In accordance with the system depicted, when processor 31 requests modified data D1 such data is supplied to cache bus 37. Control unit 34 simultaneously controls the transfer thereof both to cache unit 33 via cache bus 37 and to main memory 35 via main memory bus 38 in a single data transfer operation.

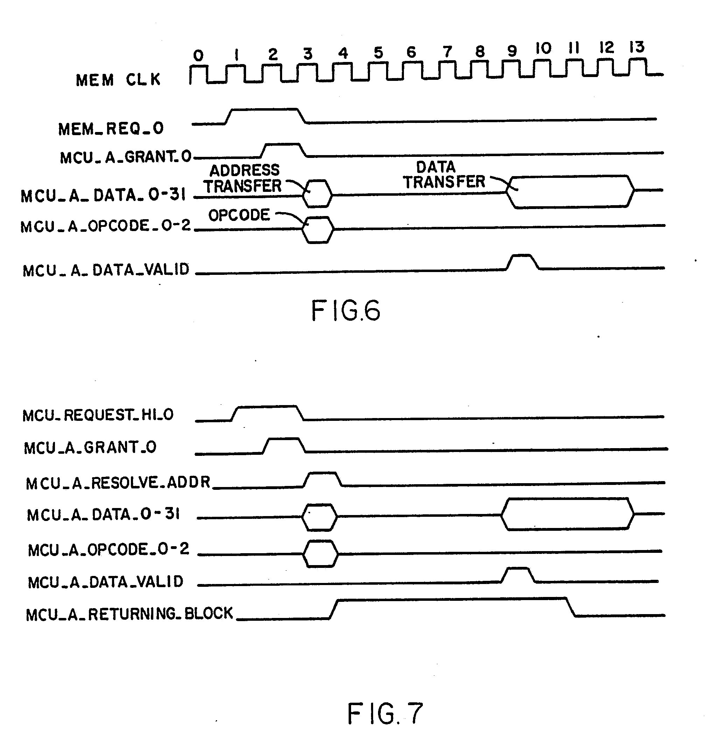

The above operations can be better understood with the help of the timing diagrams of FIGS. 6 and 7. FIG 6 illustrates an exemplary transfer of data at the request of a first processor from main memory to the processor's cache unit and can be contrasted with the exemplary transfer of modified data, at the request of a second processor, from the first processor's cache unit to the requesting processor's cache unit and to main memory.

As can be seen in FIG. 6, a processor, e.g., processor JP0, asserts a request signal (MEM_REQ_0) for data from main memory and a management control unit 34, which monitors the use of the cache bus 39 and the main memory bus 38, grants the use of such buses, if they are free, by asserting a grant signal (MCU_A_GRANT_0). Following the grant, the requesting processor supplies the address of the data requested, as well as the op-code information concerning its intended use of the data, onto the cache bus 37 (see signals MCU_A_DATA_0-30 and MCU_A_OPCODE_0-2). When it is determined that data resides in main memory and is valid data, the control unit 34 asserts the MCU_A_DATA_VALID signal and thereby controls the transfer of the data from main memory onto the main memory bus 38 and thence to the cache bus 37 for receipt and storage in cache unit 32. Processor JP0 thereupon processes such data in a manner so as to modify the data.

As can be seen in FIG. 7, if another processor, e.g., processor JP1, requests the modified data by asserting a request signal (MCU_REQUEST_HI_0), the control unit 34 again asserts a grant signal (MCU_A_GRANT_0) if the cache bus 37 is available. The modified data is identified by its address and op-code (MCU_A_DATA_0_31 and MCU_A_OPCOPE_0-2) which is placed on the cache bus 37. At the same time the control unit 34 asserts a signal (MCU_A_RESOLVE_ADDR) requesting that address coherency be checked before the modified data is permitted to be transferred. The MCU_A_RETURNING_BLOCK signal is asserted while a coherency check is being performed. During the coherency check the address supplied by the requesting processor is compared with the address of the modified data in the cache unit of the requested processor to assure that the data requested is identified correctly as the same data which has been so modified. If a comparison shows such a correct identification, then the valid modified data is placed on the cache bus 37 and on the main memory bus 38 (see MCU_A_DATA_VALID signal) for simultaneous transfer to the cache unit 33 of the requesting processor and to the main memory 35.

In another case a processor may access data and modify it for its own use but no other processor may request such modified data. In such an operation the modified data is placed in the processors cache unit and remains there until it is requested by another processor in which case the modified data can be accessed from the first processor's cache unit and transferred simultaneously from such cache unit to the requesting processor's cache unit and to main memory in the manner discussed above.

If a processor's cache unit contains modified data which must be displaced from the cache unit, i.e., in order to make room therein for other data, the modified data can at that time be overwritten, although such modified data is still contained in main memory. If such modified data has been further subsequently modified before such displacement occurs, the further modified data must be transferred to main memory.

Accordingly, the use of the system of FIG. 5 permits immediate transfer of modified data to a requesting cache unit and to main memory simultaneously using the cache and main memory buses. Thus, the time over which a modified data transaction is performed is reduced in comparison with prior systems and the overall system can provide a much higher data through-put than such previously known systems.

If the system of Fig. 5 is used in the context of a system as depicted in Figs. 1 or 3, for example, wherein when the cache units are ported to two or more cache buses which are controlled by two or more memory control units, if one of the control units is used to control a modified data transfer operation with respect to one set of cache and memory buses, the other control units are available for use in performing completely independent processing/data transfer operations with respect to one or more of the processor/cache unit pairs and one or more of the other sets of cache and memory buses.

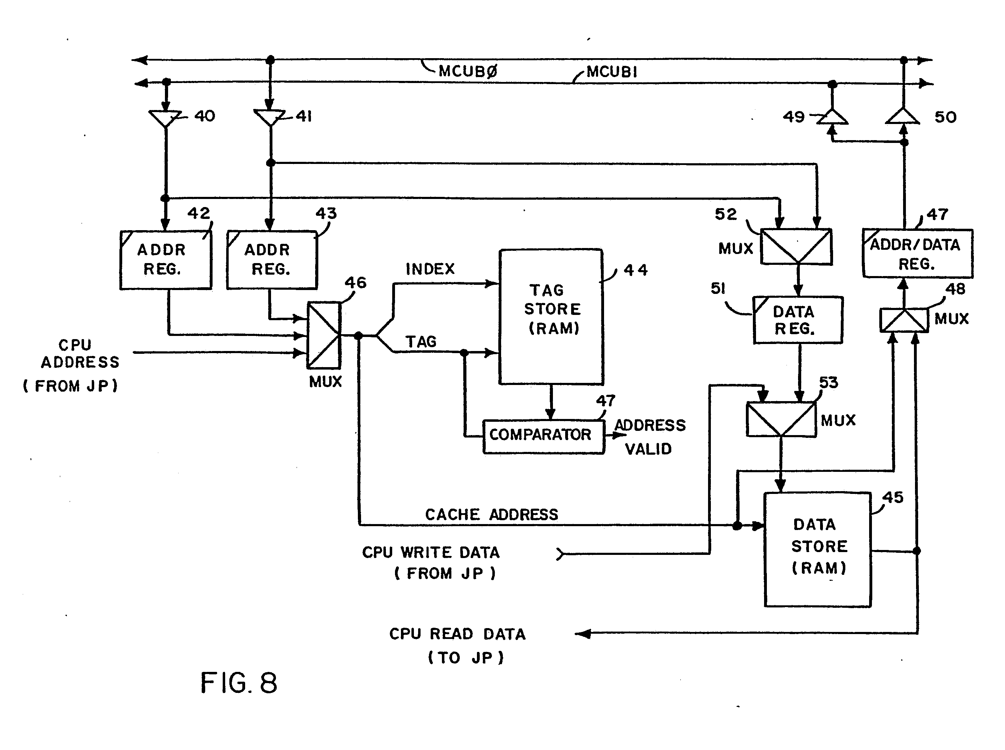

It is helpful in understanding the operation of a cache unit to consider a general block diagram of a typical cache unit as shown in FIG. 8. For simplicity, the unit is illustrated in the context of a system using two processors and two associated cache units (as in FIG. 1). Accordingly, the system uses two cache buses MCUB0 and MCUB1 for transferring addresses and data. Different addresses which can be broadcast simultaneously, for example, on separate buses are supplied via incoming driver units 40 and 41 to address registers 42 and 43. The coherencies of such addresses must be determined to identify which address is intended for the cache unit in question. A tag store random access memory (RAM) 44 stores index and tag portions of all addresses in the associated cache data store RAM 45.

The index and tag bits of each received address from registers 42 and 43 are examined in sequence, being supplied in such fashion via multiplexer (MUX) 46 to tag store 44, the tag bits being supplied to comparator logic 47. The tag bits are compared with the tag bits in tag store 44, which correspond to the addresses of data store 45, to determine if the received address corresponds to an address in data store 45. If such a correspondence exists, the comparator identifies the address as a valid data store address (ADDRESS VALID) i.e., the cache unit recognizes that a received address is intended for it. If no such correspondence is found, the cache unit identifies an incoming address as invalid for it and ignores it.

If data at such valid address is to be read from data store 45, the address is supplied to the data store RAM from MUX 46 and the address and data are subsequently supplied to an output register 47 in MUX 48 and thence to the same MCUB bus on which the address was originally received via outgoing bus driver units 49 and 50. If data is to be written into data store 44 at such valid address, the data is supplied to a data register 51 via MUX 52 and then to data store 45 via MUX 53.

The processor associated with the cache unit is also provided with direct access to tag store 44 and data store 45 for providing addresses, and write and read data transfers, to and from the data store, as requested by the CPU, using MUX 46 and MUX 53, as shown. Appropriate operation of the units depicted in FIG. 8 can be controlled using suitable control logic (not shown) therefor in the cache unit, the design of appropriate control logic being well within the skill of those in the art.

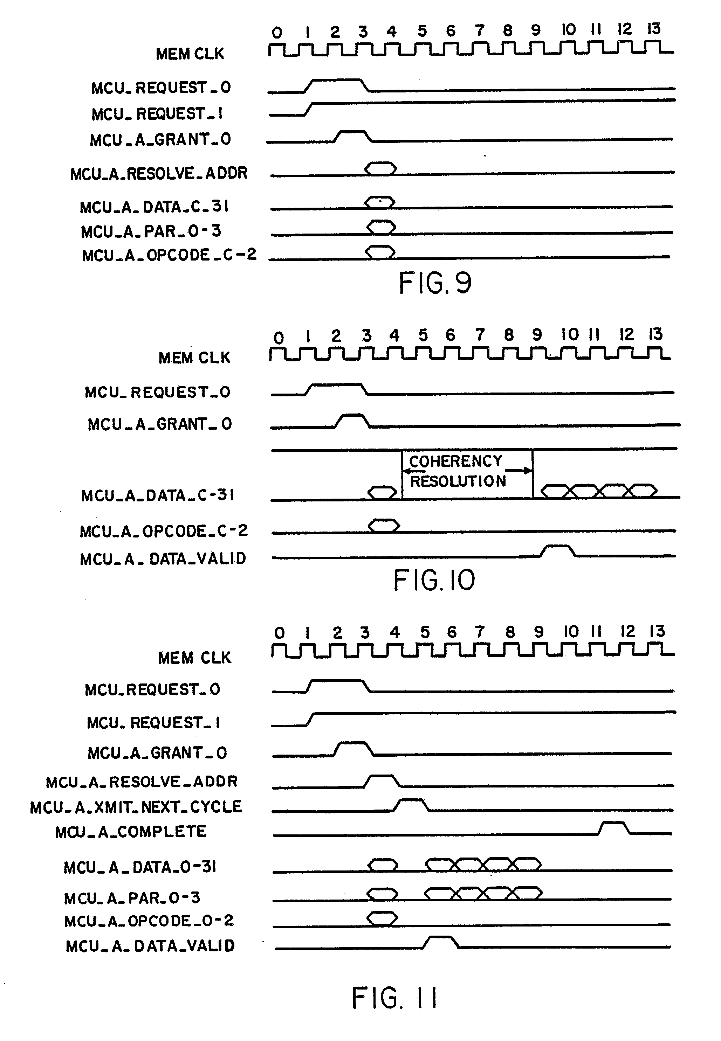

In order to better understand the invention as described above, it is helpful to duscuss further a specific embodiment of the bus system protocol which is to be followed in practicing the invention. Once the operating principles of such a bus protocol have been established, it would be well within the skill of those in the art to devise specific logic circuit techiques for handling data transfers in accordance therewith. An exemplary protocol is discussed below with reference to the timing diagrams of Figs. 9-17.

5

Such bus protocol provides for all data block transactions to and from main memory and also provides for inter-processor message passing and fox arbitrating access rights to memory blocks for preserving cache coherency.

Each MCU bus has, for example, a 32 bit data path used for transmitting both addresses and data. Four byte-parity bits are associated with the data path. Double word addresses are right-justified on this data path, allowing a maximum address range to a specific system, for example, of 16 Gbytes.

All transactions on the MCU buses involve the transfer of four double word cache blocks which do not cross block boundaries. When a double word address is transmitted as part of a data request, it specifies which double word of the memory block is to be supplied first. The remainder of the block is then supplied in "wrap-around" order, as would be well-known to the art.

Arbitration of the MCU buses is performed centrally by the memory control units. Each requestor has its own bus interface circuitry and request lines, which are held high until the requestor has been granted an MCU bus. The granted requestor then presents this request by driving a 3-bit request opcode and an address on to the 32-bit data path. The opcodes and addresses also provide information to the other inteface circuits on the bus for performing cache coherency operations.

MCU bus operations are transactionalized, that is, each interface circuit must preserve all information pertaining to its request until the successful completion of a bus transaction. If an error is detected during an operation transaction, the transaction will be subsequently retried, starting with the re-presentation of the opcode and address.

Each MCU bus is controlled by its own memory control unit. In an exemplary two-bus system, for example, described here to illustrate the bus protocol principles involved, all interface circuits are connected to both MCU buses and must participate in cache memory coherency operations on both such buses. Requests for service are made over separate request lines common to both buses and the memory control units associated therewith determine which bus will be granted to the requestor.

Such systems may be operated as fault-tolerant systems, i.e., with the two memory control units and two MCU buses being redundant and running in lockstep. In such systems, requestor pairs will be granted different buses, and each requestor will be inhibited from performing cache coherency operations on the bus not serving it.

In a particular embodiment, for example, the following eight op-code operations are defined for the MCU buses, as

000 No Operation (NOP)

001 Read with Read-Only Access (Read_RO)

010 Swap with Read-Only Access (Swap_RO)

011 Send Message (Send)

100 Upgrade Access to Read-Write (Upgrade)

101 Read with Read-Write Access (Read_RW) 110 Swap with Read-Write Access (Swap_RW) 111 Write Block (write)

In addition, caches interface circuits may have to perform one or more of the following sub-operations in order to complete an operation:

- Cache Coherency Check
- Invalidate Block
- Transfer Block
- NACK (Block Locked)
- Receive Message
- NACK (Cannot Take Message)

In a No Operation, the NOP opcode is driven onto the opcode lines, and no further actions occur. No cache coherency checks occur, and the memory control unit is free to grant the bus to another requestor at the first available opportunity.

For Read operations of either a Read-Only Access type or a Read with Read-Write Access type, the requestor drives the opcode lines with the appropriate Read opcode, and the address of the block desired, specifying which double word is desired first. The block is transferred to the requestor by the memory control unit or by another cache which may be holding the block.

For Swap operations of either a Read-Only Access type or Read-Write Access type, the Swap involves both the reading of a block and the writing back of a block to update main memory. A Swap Operation is used only when a cache must displace modified data therein.

For Send Message operation, the requestor drives the opcode lines with the Send opcode, and the address lines to specify the message destination or destinations. The data lines are subsequently driven with the four double word message. The destination returns a NACK if the message cannot be taken at that time.

An Upgrade operation is one intended to modify a block in a cache and, for that purpose, the cache must upgrade its ability to write. For such an Upgrade Access to Read-Write operation, the requestor drives the opcode lines with the Upgrade opcode, and the address lines with the address of the block that Read-Write access is desired for. All other caches perform a cache consistency check with the address, and take appropriate cache consistency actions. The Upgrade is granted if no inconsistent conditions are found within a given number of cycles. For example, if a NACK is asserted by another cache (indicating that the other cache is modifying the same data) an Upgrade is not granted.

For a Write Block operation, the requestor drives the opcode lines with the Write opcode and the address lines with the address of the block to be written, specifying the first double word to be transferred. The data lines are driven with the four double words to be written. All other caches take appropriate cache coherency actions. A Write Block is essentially exclusively used for I/O operations. Thus, an I/O controller desires to transfer data from an I/O device to main memory. If the data is modified by the I/O device, then the other caches must validate that data block if it is contained therein. Each cache makes a cache coherency check to see if it has the block and, if it does, the cache validates that data block.

With respect to the exemplary sub-operations listed above as performed by cache interface events the following descriptions are helpful in understanding the operations involved.

For Cache Coherency and Block Locking sub-operations, the purpose of cache coherency checking is to insure that all copies of a cache block in the system are identical. In order to maintain this consistency, shared access to cache blocks may have to be restricted under certain circumstances.

A Cache Interface which holds a cache block does so in one of four access modes, namely, Read-Only, Read-Write, Lock, or Write-Only modes.

Read-Only access is the only access mode in which simultaneous sharing of a block among caches is permitted. Since the block cannot be modified by any cache which is holding it, all copies are valid. All caches holding a shared block must hold it with Read-Only access while it is being shared, and all must invalidate their copy of the block if it is requested in another access mode. Read-Write access is an exclusive access mode, i.e., no other cache may hold a particular block, in any access mode, while one cache holds it in a Read-Write access mode. If another requestor request a block being held with Read-Write access, the cache holding the block must transfer the block to that requestor. Read access to the block may be retained if the request is for a Read-Only access mode.

Locked access is an uninterruptible Read-Write access mode. To prevent deadlock, each cache may only hold a lock on one block at a time. A cache must hold a block with Read-Write access before it locks it, to insure exclusivity and may only hold a lock on a block for one instruction before releasing the lock. If another requestor requests a block while it is locked, the cache holding the block returns a NACK to the requestor. The requestor should then re-request the block at a later time.

Write-Only access is in effect a special case. In each mode the cache wanting to write the block must generate the entire four double word block, without having read the block. Such sub-operation is used in specific cases, for example, where the block may originate from outside the memory system. Since new data is being brought into the memory system, any cache holding a block must invalidate its copy if Write-Only access to that block is requested.

Because of these limitations on shared access to blocks, each request on an MCU bus must be evaluated by every cache in the system to determine whether any actions need to be taken to preserve cache coherency. Cache coherency must be checked for the operations of Reads, Writes, Swaps, and Upgrades. No cache coherency checks should be performed for message transmissions, as they do not involve cache blocks. Certain actions may have to be performed by caches holding blocks requested by others, in order to preserve cache coherency. Such actions include invalidating a block, downgrading access to a block from Read-Write to Read-Only, transferring a block to a requestor, and sending a NACK to a requestor.

The following table summarizes the actions that must be taken by a cache in response to a request for a block that it holds:

| Cache's Access Mode | | | |
|---|---|---|---|
| Requested Access Mode | Read-Only: | Read-Write: | Locked: |
| Read-Only | No Action | Transfer and Downgrade | NACK |
| Read-Write | Invalidate | Transfer and Invalidate | NACK |
| Write-Only | Invalidate | Invalidate | NACK |

A cache "holding" a block with Write-Only access need not resolve cache coherency with respect to the block to be written and the cache merely writes the block when it is granted the bus.

An MCU bus further provides a message passing mechanism as a means of interprocessor communications. The higher levels of message protocol, i.e., the meanings of the fields in a message, are not defined by the MCU bus protocol. Messages are defined as four double words long. They can be sent to one or several processors simultaneously.

A cache interface to the MCU buses should have the ability to buffer at least one message. If a message is sent to a cache interface when that interface's buffer is full, the interface must assert the NACK signal to indicate this condition. In this case, the sending interface should wait several cycles, then repeat the attempt to send the message.

To facilitate the sending of messages to multiple addresses, and to simplify the detecting of a message by its intended destination, message destination addresses are transmitted in a decoded manner. To send to several destinations, more than one line in the address is asserted. Processor addresses, for example, are determined by the position they occupy on a chassis of the system.

The operation protocols discussed above can be described in further detail with reference to the timing diagrams of Figs. 9-17. All operations requested by caches begin with an Arbitration and Grant Phase, and continue with actions specific to a particular operation. Sub-operations are not preceded by an Arbitration and Grant Phase. All operations are transactionalized for error detection and recovery purposes. The specific provisions for transactionalization are specified in the individual operation protocols.

For an Arbitration and Grant Phase , discussed with reference to FIG. 9, a requestor may make its request at an appropriate priority level, e.g., a HI priority level. To request an MCU bus, the requestor asserts its MCU_REQUEST_HI line and must continue to assert this line until an MCU asserts either an MCU_A_GRANT or an MCU_B_GRANT. If an MCU_A_GRANT is asserted, the operation will take place over MCU bus A, and if MCU_B_GRANT is asserted, the operation will take place over MCU bus B.

In the cycle following the MCU's assertion of a GRANT signal, the requestor must drop its REQUEST signal and drive the MCU_OPCODE, MCU_DATA, and MCU_PAR lines on the granted bus with the opcode and address of its desired operation. The MCU_RESOLVE_ADDR line of that bus must be asserted if the operation requires a Cache Coherency Check. These lines must only be driven for one cycle. The dropping of the MCU_OPCODE, MCU_DATA< and MCU_PAR signals at the end of the cycle in which they were driven completes the Arbitration and Grant Phase. The operation then continues with the operation-specific protocol.

For a No Operation mode the operation (or, better still, the lack of one) concludes with the Arbitration and Grant Phase.

For .Read operations, discussed with reference to FIG. 10, both Read with Read-Only Access and Read with Read-Write Access follow the same protocol. Starting with a specified cycle following the requestor's driving of the address on the bus (i.e., the sixth cycle in FIG. 10), the requestor waits for the MCU to assert the MCU_DATA_VALID signal on the appropriate bus. The first double word of the block being read is driven onto the bus of the first cycle that MCU_DATA_VALID is asserted and must be registered at the end of that cycle. The three remaining double words are driven on the MCU_DATA lines in the three following cycles.

If an error is detected during a Read Operation, an MCU_BUS_ERROR signal for the affected bus is asserted by the unit detecting the error, and the requestor must re-initiate the Read Operation, beginning with requesting the bus. The requestor must keep track of the number of re-attempts, and the attempts can be abandoned at some selected point.

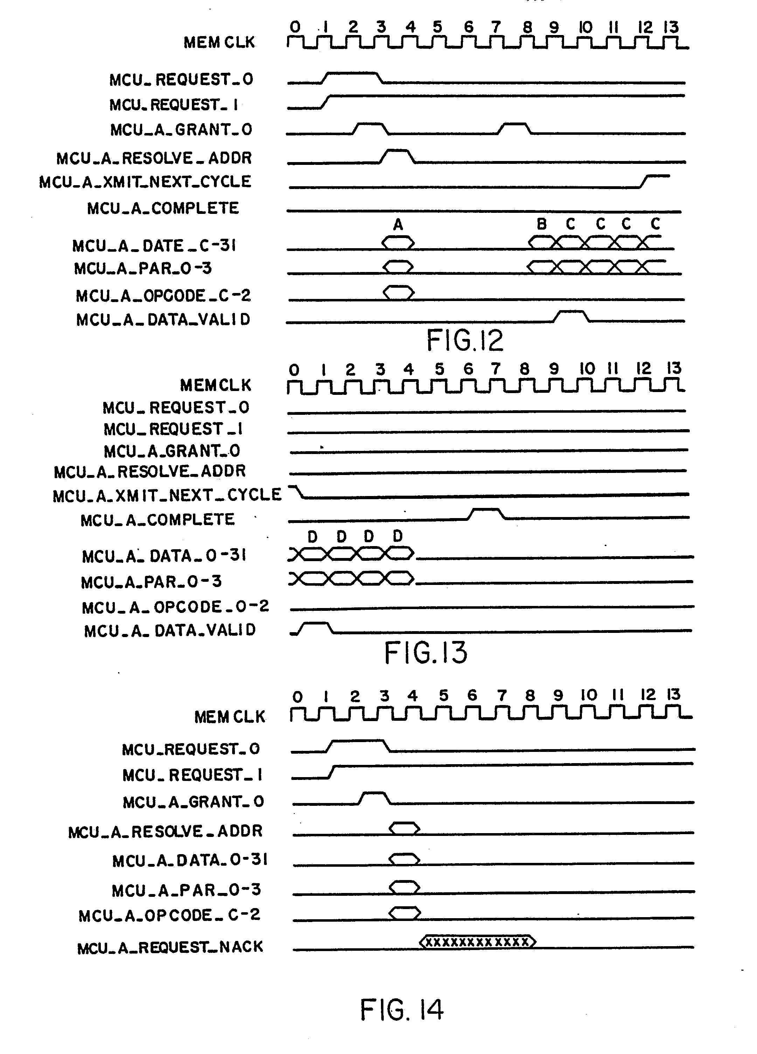

For a Write Operation, discussed with reference to FIG. 11, following the Arbitration and Grant Phase, the requestor waits the assertion of the MCU_XMIT_NEXT_CYCLE line on the granted bus. In the four cycles immediately following the assertion of this signal, the requestor drives the four double words to be written onto the MCU_DATA and MCU_PAR lines of the granted bus.

A Write Operation is completed either by the assertion of the MCU-COMPLETE signal by the MCU, or by the assertion of an MCU_BUS_ERROR signal. If an MCU_BUS_ERROR signal is asserted, the requestor must re-initiate the entire Write operation, beginning with requesting the bus.

For a Swap Operation, discussed with reference to FIG. 12, the Swap with Read-Only Access operation and the Swap with Read-Write Access operation each follow the same protocol. A Swap operation is essentially a Read Operation followed by a Write Operation. One exception to this is that only the Read address is checked for Cache Coherency.

In the Arbitration and Grant Phase (Fig. 9), the requestor drives the address for the Read Operation portion of the Swap operation. Following the Arbitration and Grant Phase, the requestor awaits a second assertion of the MCU-GRANT signal for the granted bus. On the cycle following the second assertion, the requestor drives the MCU_DATA and MCU_PAR lines of the granted bus with the address for the Write Operation. These lines are driven for one cycle only.

Following the driving of the Write Address, the requestor awaits the assertion of the MCU_DATA_VALID signal to indicate that the first double word of the Read data is valid on the bus. Transfer of the Read data continues in the next three cycles following the assertion of MCU_DATA_VALID.

The requestor next awaits the assertion of MCU_XMIT_NEXT_CYCLE. This assertion may occur during the last cycle of the Read data transfer. On the four cycles following the assertion of MCU_XMIT_NEXT_CYCLE, the requestor drives the four double words to be written.

The Swap Operation is completed either by the assertion of the MCU-COMPLETE signal, or by the assertion of an MCU_BUS_ERROR signal. The requesting cache must continue to perform Cache Coherency Checks on the block to be written until the assertion of the MCU-COMPLETE signal. If an MCU_BUS_ERROR signal is asserted, the requesting cache must re-initiate the entire Swap operation, beginning with requesting the bus.

For an Upgrade Access Operation, discussed with reference to FIG. 13, following the Arbitration and Grant Phase, the requestor must wait a selected number of cycles, e.g., four cycles. If the MCU_REQUEST_NACK signal is asserted on the granted bus during the fourth cycle following the driving of the bus, the block is locked, and the requestor must re-initiate the Upgrade Operation later. If no NACK is asserted, the Upgrade is considered to be granted.

If an MCU_BUS_ERROR signal is asserted during the Upgrade Operation, the requestor must re-initiate the operation, beginning with requesting the bus.

For a Send Message Operation, discussed with reference to FIG. 14, following the Arbitration and Grant Phase, the requestor must wait a selected number of cycles, e.g., four cycles. At the end of the fourth cycle the intended message recipient must be driving either the signal CLR_TO_SEND_MSG or REQUEST_NACK on the involved bus. A CLR_TO_SEND_MSG indicates that the message can be accepted, and a REQUEST_NACK indicates that the message cannot be taken at this time. At any time following the fourth cycle, the MCU will assert the signal XMIT_NEXT_CYCLE. On the cycle following XMIT_NEXT_CYCLE, the requestor must transmit the first double word of the message, the assert DATA_VALID. On the following three cycles, the remaining three double words of the message are transmitted, and DATA_VALID is dropped.

If a REQUEST_NACK signal is the response of the recipient to the message request, the request must be retried at a later time. If an MCU_BUS_ERROR signal is asserted, the requestor must re-initiate the operation, beginning with requesting the bus.

The failure of an intended message recipient to raise either CLR_TO_SEND_MSG or REQUEST_NACK in response to a message request is treated as an error condition.

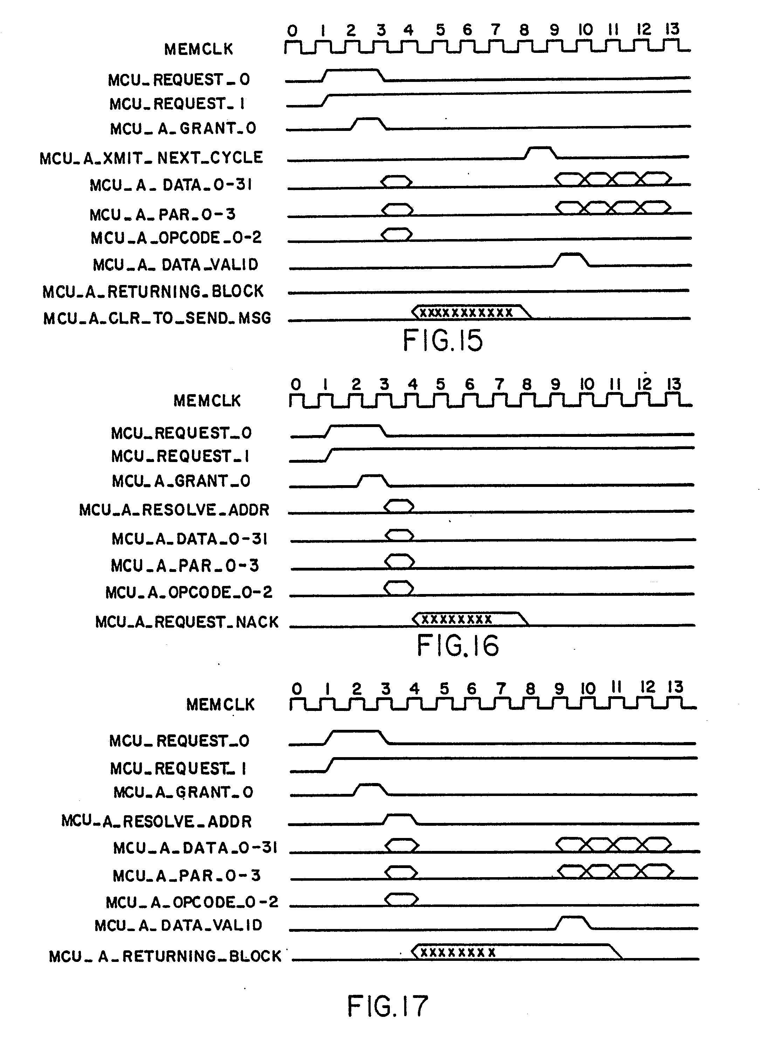

For a Cache Coherency Check Sub-Operation, discussed with reference to FIG. 15, a Cache Coherency Check begins with the Arbitration and Grant Phase of an operation. The RESOLVE_ADDR signal for the MCU bus that is involved will be asserted if the address must be checked. At the end of a cycle in which RESOVE_ADDR is asserted, each interface must insure that the address and opcode have been registered from the bus.

If the indicated cache coherency action is to invalidate a block being held, the invalidation must be carried out immediately (within a cycle, for example, of the RESOLVE_ADDR). No MCU bus signal needs to be asserted to indicate that an invalidation has taken place.

If a block must be transferred to the requestor, a RETURNING_BLOCK signal must be asserted on the bus that is involved as soon as the need to transfer is determined. At the latest, the signal must be asserted by a selected cycle, e.g., the third cycle, following the RESOLVE_ADDR. A RETURNING_BLOCK signal must be held asserted until the subsequent Transfer Block Sub-Operation is complete.

If a request must be NACKed due to a locked block, the REQUEST_NACK signal on the involved bus must be asserted as soon as possible following the determination of the need to NACK.. At the latest, it must be raised during a selected cycle, e.g., the third cycle following the RESOLVE_ADDR. REQUEST_NACK must be held through the fourth cycle following the RESOLVE_NACK and then dropped.

For a Transfer Block Sub-Operation, discussed with reference to FIG. 16, if a block must be directly transferred from one processor to another as a cache coherency action, the RETURNING_BLOCK signal must be raised as specified in the Cache Coherency Check sub-operation. The RETURNING_BLOCK signal is held while the block is fetched from the cache and transferred.

The transferring cache may not begin to transfer the block before the sixth cycle, for example, following RESOLVE_ADDR. The block must be transferred with the desired double word transferred first. When ready, the transferring cache drives the first double word of the block onto the bus, and asserts the DATA_VALID signal for one cycle. In the following three cycles, the remaining three double words of the block are driven onto the bus, and the DATA_VALID signal is dropped. The RETURNING_BLOCK signal is dropped in the cycle following the driving of the second double word.

For a Receive Message Sub-Operation, discussed with reference to FIG. 17, messages are address in a decoded manner, with each line of DATA_0-31 corresponding to a processor. When the Send Message opcode (011) is driven onto the OPCODE lines of an MCU bus, the line on that MCU bus corresponding to the processor should be checked to see if a request is being made to send a message to that, processor. When a message request has been made to a processor, the processor must assert the CLR_TO_SEND_MSG signal on that bus if it can receive the message, or assert the REQUEST_NACK signal on that bus if it cannot receive a message at that time. Either signal should be raised by the third cycle following the Send Message request, and must be held through the fourth cycle following the request.

If the message can be received, the receiving processor awaits the DATA_VALID signal on the involved bus. The message is transmitted during the cycle that DATA_VALID is asserted and the three following cycles message requests should be NACKed when the incoming message buffer is full, or when other bus operations in progress make it impossible to control a message reception.

If the BUS_ERROR signal is raised on the bus that is involved during a message reception, the message must be disregarded, and the message sender will re-request the Send Message operation.

For a Bus Error Sub-Operation, when a parity or other error is detected on one of the MCU buses, the interface detecting the error should assert and hold the BUS_ERROR line on the involved bus. The signal should be held through the end of any pending operation on that bus. Any operation in progress when the BUS_ERROR signal is asserted must be restarted form the beginning, and the bus must be re-requested.

For a Bus Reset Sub-Operation, when an MCU bus is to be reset, the MCU controlling the bus will assert and hold the BUS_RESET line on that bus. The signal will be held through the end of any pending operation on that bus. Any interfaces which have requested the bus but have not been granted the bus may continue to request the bus through the reset. Any operation in progress when the BUS_RESET signal is asserted must be restarted from the beginning, and the bus must be re-requested.

## Claims

1. A data processing system comprising
at least two processor means;
main memory means for storing data;
at least two cache memory means for storing copies of selected data stored in said main memory means, each cache memory means being associated with one of said processor means;
at least two cache bus means, each said cache memory means being connected to each of said at least two cache bus means;
at least two main memory bus means connected to said main memory means; and
control means for controlling the use of said cache bus means and said memory bus means for permitting the simultaneous broadcasting of different data by one or more cache memory means on to one or more of said cache bus means and to one or more of said main memory bus means so that different data are transferred simultaneously from different cache memory means to others of said cache memory means or to said main memory means on different ones of said cache bus means and said main memory bus means.

2. A data processing system in accordance with claim 1 and further wherein
each said cache memory means includes means for broadcasting data on any one of said cache bus means, said data including information identifying another cache memory means or said. main memory means to which said data is intended to be transferred.

3. A data processing system in accordance with claim 1 and further wherein each said cache memory means and said main memory means includes means for responding to and receiving only data on any one of said cache bus means or on one of said main memory bus means which is identified as data intended to be transferred to said responding cache memory means or main memory means.

4. A data processing system in accordance with claim 1 wherein said control means includes at least two control means each associated with one of said cache bus means and one of said main memory bus means, each of said control means controlling the use of the cache bus means and the main memory bus means with which it is associated.

5. A data processing system in accordance with claim 1 wherein said system includes two processor means and two cache memory means each associated with one of said processor means, two cache bus means and two main memory bus means.

6. A process for controlling the transfer of different data among different ones of a plurality of cache memory units including the steps of broadcasting different data from different ones of said cache memory units simultaneously on to different ones of a plurality of buses; identifying in each different data the cache memory unit to which said data is intended to be transferred; and causing each identified cache memory unit to respond to and receive data intended to be transferred to said identified cache memory unit.

7. A data processing system comprising at least two processor means; main memory means for storing data; at least two cache memory means for storing copies of selected data stored in said main memory means, each cache memory means being associated with one of said processor means; at least one cache bus means, each said cache memory means being controllably connected to said at least one cache bus memory means; at least one control means connected to said at least one cache bus means and said at least one main memory bus means for controlling the use of said cache and main memory bus means so that data which has been modified by a processor means and stored in its associated cache memory means can be transferred to another one of said cache memory means which requests said modified data via said at least one cache bus means and simultaneously to said mean memory means via said at least one main memory bus means.

8. A data processing system in accordance with claim 7 wherein said simultaneous transfer of said modified data is performed in response to a request for said modified data by said another one of said cache memory means.

9. A data processing system in accordance with claim 7 wherein said system includes a plurality of cache bus means, a plurality of main memory bus means, and a plurality of control means, each control means associated with one of said cache bus means and one of said main memory means for controlling the use thereof.

10. A data processing system in accordance with claim 9, one of said control means controlling the use of its associated cache bus means and main memory bus means for transferring modified data from one of said cache memory means to another of said cache memory means and at least one of the others of said control means controlling the use of its associated cache bus means or main memory means for simultaneously providing at least one data transfer from a cache memory means to another cache memory means or to said main memory means.

11. A data processing system in accordance with claim 7 and further wherein said requesting cache memory means includes means for comparing the address of said modified data with an address supplied by said requesting cache memory means to provide an address coherency check of said modified data.

12. A data processing system in accordance with claim 7 wherein said system comprises two cache memory means, two cache bus means, two main memory bus means, and two control means each controlling the use of one of said cache bus means and one of said main memory bus means.

13. A process for transferring modified data from one cache unit of a data processing system to another cache unit of said data processing system and to a main memory of said system comprising the steps providing a request from said another cache unit for modified data present in said one cache unit; controlling the transfer of said modified data from said one cache unit simultaneously to both said another cache unit and said main memory.

14. A process in accordance with claim 13 and further including the step of checking the address coherency of the address of the modified data from said one cache unit and an

11

address for said modified data as requested by said another cache unit.

FIG. 1

FIG.2

FIG. 3

FIG. 4

FIG. 5

FIG.6

FIG.7

FIG. 8

EP 0 361 887 A2

MEM CLK

MCU_REQUEST_O

MCU_REQUEST_I

MCU_A_GRANT_O

MCU_A_RESOLVE_ADDR

MCU_A_DATA_C_31

MCU_A_PAR_O-3

MCU_A_OPCODE_C-2

FIG. 9

MEM CLK

MCU_REQUEST_O

MCU_A_GRANT_O

COHERENCY RESOLUTION

MCU_A_DATA_C-31

MCU_A_OPCODE_C-2

MCU_A_DATA_VALID

FIG. 10

MEM CLK

MCU_REQUEST_O

MCU_REQUEST_I

MCU_A_GRANT_O

MCU_A_RESOLVE_ADDR

MCU_A_XMIT_NEXT_CYCLE

MCU_A_COMPLETE

MCU_A_DATA_O-31

MCU_A_PAR_O-3

MCU_A_OPCODE_O-2

MCU_A_DATA_VALID

FIG. 11

FIG.12

FIG.13

FIG. 14

MEMCLK

0 1 2 3 4 5 6 7 8 9 10 11 12 13

MCU_REQUEST_O

MCU_REQUEST_I

MCU_A_GRANT_O

MCU_A_XMIT_NEXT_CYCLE

MCU_A_DATA_0-31

MCU_A_PAR_0-3

MCU_A_OPCODE_0-2

MCU_A_DATA_VALID

MCU_A_RETURNING_BLOCK

MCU_A_CLR_TO_SEND_MSG

**FIG.15**

MEMCLK

0 1 2 3 4 5 6 7 8 9 10 11 12 13

MCU_REQUEST_O

MCU_REQUEST_I

MCU_A_GRANT_O

MCU_A_RESOLVE_ADDR

MCU_A_DATA_0-31

MCU_A_PAR_0-3

MCU_A_OPCODE_0-2

MCU_A_REQUEST_NACK

**FIG.16**

MEMCLK

0 1 2 3 4 5 6 7 8 9 10 11 12 13

MCU_REQUEST_O

MCU_REQUEST_I

MCU_A_GRANT_O

MCU_A_RESOLVE_ADDR

MCU_A_DATA_0-31

MCU_A_PAR_0-3

MCU_A_OPCODE_0-2

MCU_A_DATA_VALID

MCU_A_RETURNING_BLOCK

**FIG.17**